# EUROPEAN PATENT APPLICATION

(11) **EP 4 715 942 A1**
(43) Date of publication of application: **25.03.2026**
(21) Application number: 24856723.2
(22) Date of filing: 12.08.2024
(51) Int. Cl.: H01M 10/0569, H01M 10/0567, H01M 10/052, H01M 4/58

(54) **ELECTROLYTE FOR LITHIUM SECONDARY BATTERY AND LITHIUM METAL SECONDARY BATTERY**

(30) Priority: 22.08.2023 KR 20230110045
(71) Applicant: LG Energy Solution, Ltd., Seoul 07335 (KR)
(72) Inventor: CHO, Minjae, Daejeon 34122 (KR); KIM, Soohyun, Daejeon 34122 (KR); KIM, Taejong, Daejeon 34122 (KR); CHOI, Jeongin, Daejeon 34122 (KR)
(74) Representative: Hoffmann Eitle
(86) International application number: PCT/KR2024/011951
(87) International publication number: WO 2025/042111

(57) **Abstract**

The present disclosure relates to an electrolyte for a lithium secondary battery that can improve the initial discharge characteristics, lifetime characteristics and output characteristics, etc. of a lithium metal secondary battery, and a lithium metal secondary battery comprising the same. The electrolyte may include a lithium salt; a non-aqueous organic solvent; an organic anti-solvent that exhibits a solubility for the lithium salt that is at least 10 times lower than that of the non-aqueous organic solvent; and an additive including a fluorine-substituted ether compound.

## Description

### [TECHNICAL FIELD]

### Cross-Reference to Related Application(s)

This application claims priority to and the benefit of Korean Patent Application No. 10-2023-0110045, filed on August 22, 2023, with the Korean Intellectual Property Office, the disclosure of which is incorporated herein by reference in its entirety.

The present disclosure relates to an electrolyte for a lithium secondary battery that can improve the initial discharge characteristics, lifetime characteristics and output characteristics, etc. of a lithium metal secondary battery, and a lithium metal secondary battery comprising the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as power supply of electricity, electronics, communication, and electronic devices such as computers.

Lithium metal secondary battery is a battery to which an anode active material made from lithium metal (Li-metal) material is applied, and has the advantage of having a theoretically very high energy density and capacity as compared with a battery to which a graphite-based or lithium alloy-based anode is applied according to the prior art. Thus, research and development are ongoing to apply such a lithium metal secondary battery to a battery that requires a high energy density.

However, lithium metal batteries have disadvantages in that in a charge and discharge process, the volume change of an anode is large, a needle-like lithium metal layer (lithium dendrite, etc.) grows ununiformly, and due to the characteristic of the lithium metal having high reactivity, side reactions between the lithium metal layer and the electrolyte are generated, resulting in a large irreversible capacity. In addition, there is a problem that in the process of lithium metal desorption during discharge, inactive lithium(Dead Li) is continuously generated while dissolution of lithium ions and collapse of an interface layer are appearing, which results in a further increase in irreversible capacity. This is the major factor that reduces the lifetime characteristics of lithium metal batteries and prevents their practical application.

Therefore, multifaceted attempts have been made to solve the problems of the lithium metal batteries, such as forming a protective layer on the surface of the lithium metal layer or developing a new electrolyte that can suppress the electrolyte decomposition reaction on the surface of the lithium metal layer.

As one of such multifaceted attempts, the so-called local high-concentration electrolyte(LHCE) have been recently proposed, which increase the concentration of lithium salt in the electrolyte, while adds an anti-solvent that has relatively low solubility for the lithium salt (Chem Vol.4, Issue 8, August 9, 2018, p1877-1892). It is predicted that not only such a local high-concentration salt electrolyte forms a high-concentration region of lithium salt to thereby improve the output characteristics of the lithium metal battery, but also the anti-solvent surrounds the high-concentration region of the lithium salt to thereby suppress side reactions between the lithium metal layer and the electrolyte and improve the lifetime characteristics of the lithium metal battery

However, even when the local high-concentration salt electrolyte is applied, not only the improvement in lifetime characteristics of the lithium metal battery is not sufficient, but also the ionic conductivity of the electrolyte decreases and the viscosity increases, which may deteriorate the performance of the electrolyte itself. In addition, due to the decrease in the activity of the electrolyte itself, there is a disadvantage that the design capacity of the lithium metal battery is not achieved at initial stage and the initial discharge capacity, etc. are reduced. In particular, this disadvantage may appear more clearly when a cathode active material such as lithium iron phosphate is applied to reduce the production unit cost of the battery.

### [DETAILED DESCRIPTION OF THE INVENTION]

### [Technical Problem]

Therefore, it is an object of the present disclosure to provide an electrolyte for a lithium secondary battery that can improve the initial discharge capacity as well as the lifetime characteristics and output characteristics of a lithium metal secondary battery.

It is another object of the present disclosure to provide a lithium metal secondary battery that comprises the electrolyte for a lithium secondary battery and thus exhibits excellent electrochemical characteristics.

### [Technical Solution]

According to the present disclosure, there is provided an electrolyte for a lithium secondary battery comprising: a lithium salt; a non-aqueous organic solvent; an organic anti-solvent that exhibits a solubility for the lithium salt that is at least 10 times lower than that of the non-aqueous organic solvent; and an additive including a fluorine-substituted ether compound.

According to the present disclosure, there is also provided a lithium secondary battery comprising: a cathode containing a cathode active material; an anode containing a lithium metal layer; a separator interposed between the cathode and the anode; and the electrolyte of the present disclosure.

In the lithium secondary battery, the cathode active material may comprise a lithium transition metal compound, for example, lithium iron phosphate.

### [Advantageous Effects]

Since the electrolyte of the present disclosure includes an organic anti-solvent that exhibits low solubility for the lithium salt, the anti-solvent surrounds a high concentration region of the lithium salt even if the lithium salt is included at a high concentration, thereby suppressing side reactions between the lithium metal layer and the electrolyte and improving lifetime characteristics and output characteristics of the lithium metal battery.

In addition, the electrolyte contains a fluorine-substituted ether compound as an additive, which can form a coating film on the lithium metal layer, thereby further suppressing side reactions of the electrolyte and further improving the lifetime characteristics of the lithium metal battery. Furthermore, it has been confirmed that such additives can increase the activity of the electrolyte and suppress the decrease in initial capacity of the battery due to the addition of other additives (e.g., nitrate-based additives).

Therefore, the electrolyte of the present disclosure can be used in a lithium metal secondary battery to improve its characteristics such as initial discharge capacity as well as its lifetime characteristics and output characteristics.

### [BRIEF DESCRIPTION OF THE DRAWING]

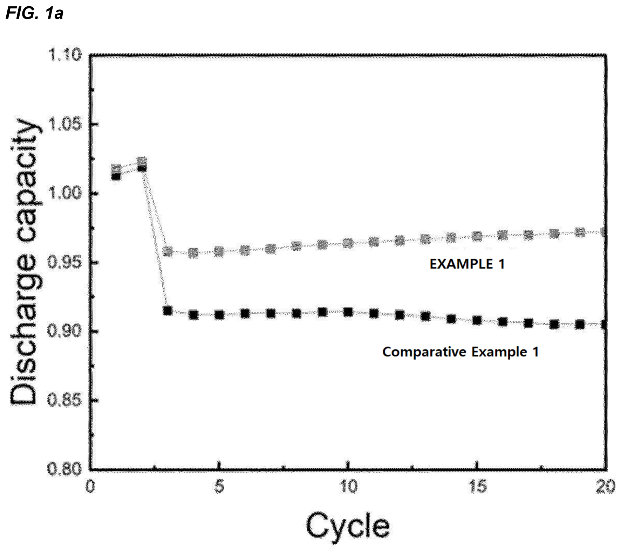

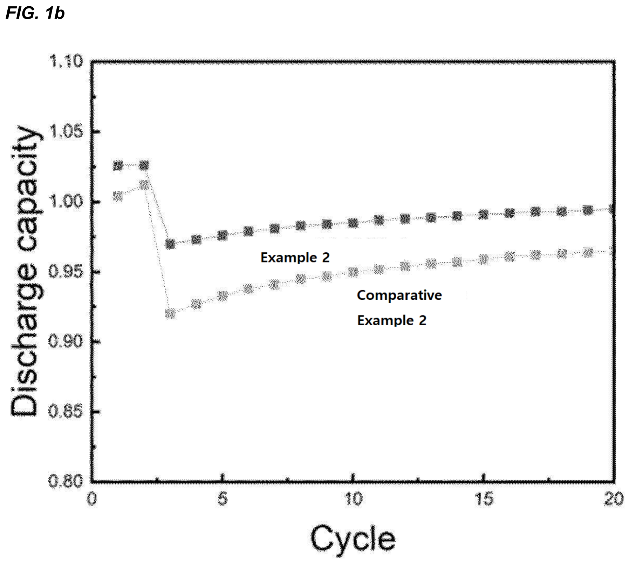

FIG. 1a is a graph showing the results of evaluating the discharge capacity for each initial cycle (~20 cycles) in the lithium metal secondary batteries including the electrolytes of Example 1 and Comparative Example 1, and FIG. 1b is a graph showing the results of evaluating the discharge capacity for each initial cycle (~20 cycles) in the lithium metal secondary batteries including the electrolytes of Example 2 and Comparative Example 2.

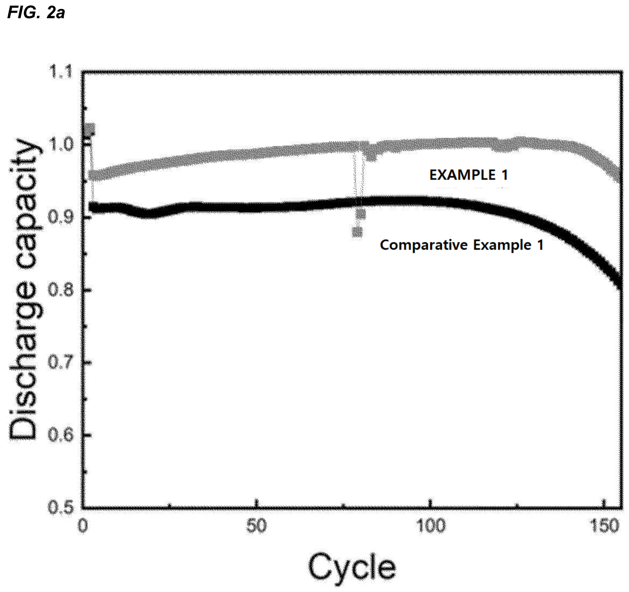

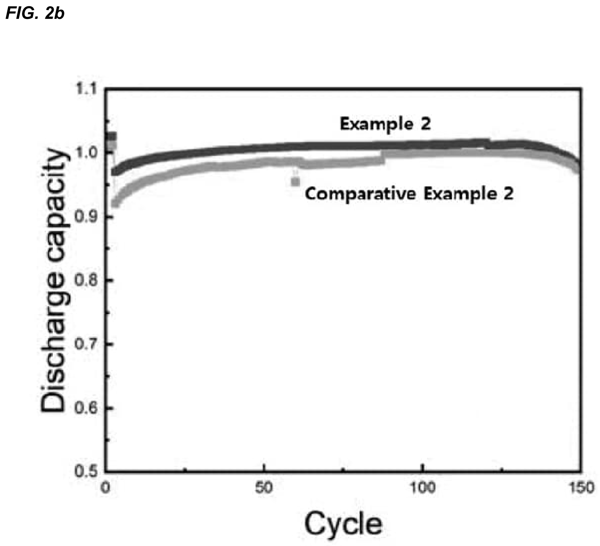

FIG. 2a is a graph showing the results of evaluating the capacity characteristics and life characteristics for ~150 cycles in the lithium metal secondary batteries including the electrolytes of Example 1 and Comparative Example 1, and FIG. 2b is a graph showing the results of evaluating the capacity characteristics and life characteristics for ~150 cycles in the lithium metal secondary batteries including the electrolytes of Example 2 and Comparative Example 2.

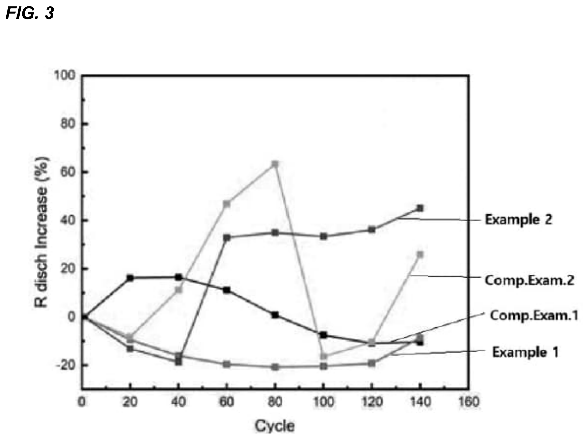

FIG. 3 is a graph showing the results of evaluating the discharge resistance for each cycle in the lithium metal secondary batteries including the electrolytes of Example and Comparative Example.

### [DETAILED DESCRIPTION OF THE EMBODIMENTS]

Hereinafter, an electrolyte for a lithium secondary battery and a lithium metal secondary battery comprising the same according to specific embodiments of the present disclosure will be described.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but are not intended to limit the inventive concept. The singular forms include plural forms unless the context clearly indicates otherwise.

It should be understood that the terms "comprise," "include", "have", etc. are used herein to specify the presence of stated features, integers, steps, operations, components or combinations thereof, but do not preclude the presence or addition of one or more other features, integers, steps, operations, components, or combinations thereof.

According to an embodiment of the present disclosure, there is provided an electrolyte for a lithium secondary battery comprising: a lithium salt; a non-aqueous organic solvent; an organic anti-solvent that exhibits a solubility for the lithium salt that is at least 10 times lower than that of the non-aqueous organic solvent; and an additive including a fluorine-substituted ether compound.

The electrolyte of an embodiment includes a non-aqueous organic solvent that dissolves a lithium salt and acts as a migration path for lithium ions, and also an organic anti-solvent that exhibits a solubility for the lithium salt that is at least 10 times, or 10 to 30 times lower than that of the non-aqueous organic solvent, and thus do not substantially dissolve the lithium salt.

The electrolyte of this embodiment may fall into the category of local high-concentration electrolytes(LHCE), and may exhibit a high-concentration region in which a lithium salt is dissolved in a non-aqueous organic solvent at a high concentration during charging and discharging of the battery, and a morphology in which the organic anti-solvent is distributed around the high-concentration region. Thus, when the electrolyte is used, the output characteristics of the battery may be improved due to the high-concentration distribution of the lithium salt. Further, depending on the organic anti-solvent distribution region, side reactions between the lithium metal layer and the electrolyte may be suppressed, and the lifetime characteristics of the lithium metal secondary battery may be improved.

In addition, the electrolyte includes a fluorine-substituted ether compound as an additive. The fluorine-substituted ether compound can form a coating film containing lithium fluoride on the lithium metal layer, thereby further suppressing the side reaction of the electrolyte to further improve the lifetime characteristics of the lithium metal battery, while suppressing gas generation. It has also been confirmed that the additive can increase the activity of the electrolyte and suppress the initial capacity decrease of the battery due to the addition of other additives (for example, nitrate-based additives). Therefore, the electrolyte of an embodiment can be used in a lithium metal secondary battery, and thus can improve the lifetime characteristics and output characteristics as well as the initial discharge capacity, and can also reduce gas generation due to the side reaction of the electrolyte.

Meanwhile, in the electrolyte of an embodiment, the lithium salt is used as a medium for transferring ions within the lithium secondary battery. For example, the lithium salt contains Li⁺ as cation, and may together include an anion selected from the group consisting of F⁻, Cl⁻, Br, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂), and taking into consideration the output characteristics of the lithium metal secondary battery and the solubility for non-aqueous organic solvents, organic anti-solvents, and the like, LiFSI or LiTFSI can be suitably used.

Further, the lithium salt may be contained in the electrolyte at a relatively high concentration of 1.0M or more, or 1.0 to 2.5M, or 1.1 to 1.8M, taking into consideration the output characteristics of the lithium secondary battery. The concentration of the lithium salt can be defined as a molar concentration taking into account the total volume of the non-aqueous organic solvent and the organic anti-solvent. Due to the high concentration of the lithium salt, desolvation of lithium ions can be further accelerated, and the output characteristics of a secondary battery can be further improved.

On the other hand, the kind of a non-aqueous organic solvent that can be included in the electrolyte is not particularly limited, and any organic solvent that has long been known to be applicable to the electrolyte of a lithium ion battery can be used. However, taking into consideration the combination with an appropriate organic solvent, the non-aqueous organic solvent may appropriately contain a carbonate-based solvent or an aliphatic ether-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the aliphatic ether-based solvent may include dimethyl ether, dibutyl ether, tetraglyme, diglyme, dimethoxy ethane, or the like.

Meanwhile, the electrolyte of an embodiment may, in addition to the lithium salt and the non-aqueous organic solvent, further include an organic anti-solvent that exhibits a solubility for the lithium salt that is at least 10 times, or 10 to 30 times lower than that of the non-aqueous organic solvent, and thus does not substantially dissolve the lithium salt. Such an organic anti-solvent may be defined as having substantially no solubility for lithium salts, for example, being able to dissolve lithium salts only in concentrations of 0.1M or less, or 0 to 0.1M, or 0 to 0.05M. In addition, the organic anti-solvent may be an organic solvent that exhibits low solubility for the lithium salt and is miscible with the non-aqueous organic solvent, for example, an ether-based solvent having a fluorine-substituted alkyl group, and more specifically, it may include at least one selected from the group consisting of 1,1,2,2-tetrafluoroethyl-2,2,3,3-tetrafluoropropyl ether(TTE), bis(2,2,2-trifluoroethyl)ether(BTFE), 1,1,2,2-tetrafluoroethyl-2,2,2-trifluoroethyl ether(TFTFE), methoxynona fluorobutane(MOFB), 1H,1H,5H-octafluoropentyl-1,1,2,2-tetrafluoroethyl ether(OTE) and ethoxynona fluorobutane(EOFB).

Such an organic anti-solvent can be selected in consideration of miscibility with the non-aqueous organic solvent, solubility according to the type/concentration of the lithium salt, and the like. For example, when an aliphatic ether-based solvent is used as the non-aqueous organic solvent, 1,1,2,2-tetrafluoroethyl-2,2,3,3-tetrafluoropropyl ether(TTE) can be suitably used, and when a carbonate-based solvent is used as the non-aqueous organic solvent, 1H,1H,5H-octafluoropentyl-1,1,2,2-tetrafluoroethyl ether(OTE) can be suitably used.

As mentioned above, the electrolyte of an embodiment further comprising the organic anti-solvent may include not only a region in which a local high concentration of lithium salt exists in the non-aqueous organic solvent, but also a region in which the organic anti-solvent is distributed that is substantially free of lithium salt. In this way, since a local high concentration of lithium salt exists in a solvated form in the electrolyte, it is possible to further improve the output characteristics of the lithium secondary battery and also reduce the increase in viscosity and decrease in fluidity of the electrolyte by the organic anti-solvent distribution region.

The amount of the organic anti-solvent used can be adjusted according to the type of the non-aqueous organic solvent and the lithium salt, or the overall concentration of the lithium salt. For example, the organic anti-solvent may be included in the electrolyte in a content such that the molar ratio of the organic anti-solvent: the non-aqueous organic solvent is 1:0.4 to 1:1, or 1:0.4 to 1:0.67.

The electrolyte of an embodiment further includes a fluorine-substituted ether compound as an additive. Such a fluorine-substituted ether compound can form a coating film including, for example, lithium fluoride on a lithium metal layer. Therefore, the side reaction of the electrolyte can be further suppressed to further improve the lifetime characteristics of the lithium metal battery, while gas generation can be suppressed. In addition, as confirmed through Examples described hereinafter, it has been confirmed that the additive can increase the activity of the electrolyte and suppress the initial capacity decrease of the battery. Therefore, the lithium metal secondary battery including the electrolyte of an embodiment can exhibit improved initial discharge capacity, etc.

As the fluorine-substituted ether compound, a dialkoxy alkane compound having a total of 4 to 10 carbon atoms and substituted with multiple fluorines, for example, 3 or more or 3 to 5 fluorines may be used, and specific examples thereof include at least one selected from the group consisting of 2,2,3,3-tetrafluoro-1,4-dimethoxybutane(FDMB) and 2,2,3,3-tetrafluoro-1,4-diethoxybutane(FDEB).

In addition, the electrolyte of an embodiment can further include an additional additive, for example, a nitrate-based and/or nitrite-based compound, as necessary, and the addition of this nitrate-based and/or nitrite-based compound can further improve the capacity and lifetime characteristics of the lithium metal secondary battery. When only the nitrate-based and/or nitrite-based compound is added, the initial discharge capacity of the battery may decrease, however, it has been confirmed that this drawback can be solved by combining the above-mentioned fluorine-substituted ether compounds.

As the nitrate-based and/or nitrite-based compound, for example, at least one selected from lithium nitrate(LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), and cesium nitrite (CsNO₂) may be used.

In addition, in consideration of the improvement effect of initial discharge capacity, lifetime characteristics, and capacity characteristics due to the addition of the fluorine-substituted ether compound and the nitrate-based and/or nitrite-based compound, the additive may include 1 to 10 wt.%, or 3 to 9 wt.%, of the fluorine-substituted ether compound and 0.2 to 5 wt.%, or 0.2 to 2 wt.% of the nitrate-based and/or nitrite-based compound, based on the total weight of the electrolyte.

Meanwhile, according to another embodiment of the disclosure, a lithium metal secondary battery comprising the electrolyte of one embodiment described above is provided. Such a lithium metal secondary battery may include a cathode including a cathode active material; an anode including a lithium metal layer; a separator interposed between the cathode and the anode; and the electrolyte of one embodiment described above.

First, in the lithium metal secondary battery of another embodiment, the anode may form a lithium metal layer on one surface or both surfaces of a planar anode current collector according to the general configuration of the lithium metal secondary battery, and can be produced by depositing lithium metal on the anode current collector or rolling lithium foil.

The anode current collector is a metal that has high electrical conductivity without inducing chemical changes in the battery, and may be formed using any metal that has long been known to be usable as an anode current collector.

Specific examples thereof include metals such as stainless steel, aluminum, nickel, titanium or copper, or copper, aluminum or stainless steel whose surface is treated with carbon, nickel, titanium, silver, or the like. This anode current collector can be formed in various forms such as a film, a sheet, a foil, a net, a porous body, a foaming body, or a non-woven fabric structure.

In addition, the anode current collector may have a thickness of 3 to 100 µm, and the lithium metal layer may have a thickness of, for example, 1 to 300 µm.

Meanwhile, the cathode may include a positive current collector and a cathode active material layer located on the cathode current collector.

Such a cathode can be produced by mixing an active material and a binder, and optionally, a conductive material, a filler, or the like in a solvent to prepare a cathode slurry composition, and coating the slurry composition onto a cathode current collector.

The cathode current collector may generally have a thickness of 3 to 500 µm. The cathode current collector is not particularly limited as long as it has high conductivity without causing any chemical changes in a battery, and for example, stainless steel, aluminum, nickel, titanium, fired carbon, or aluminum or stainless steel whose surface is treated with carbon, nickel, titanium, silver, or the like may be used. In addition, the current collector may have fine protrusions and depressions formed on a surface thereof to enhance adherence of a cathode active material. For example, the current collector may be used in various forms such as a film, a sheet, a foil, a net, a porous body, a foaming body, and a non-woven fabric structure.

Further, the cathode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., L1₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1)), or the like, and any one thereof or a mixture of two or more thereof may be used.

Among these, the cathode active material may include lithium iron phosphate. For reference, the lithium iron phosphate has a low unit price and thus the expansion of its use is being considered, but the lithium metal secondary battery including a cathode containing the same exhibits a more pronounced decrease in lifetime characteristics and capacity characteristics, especially, in initial capacity and the like. However, the lithium metal secondary battery of the other embodiment can solve the decrease in capacity and initial discharge capacity, etc. by combining an electrolyte of one embodiment together with a cathode containing such lithium iron phosphate, and can contribute to the application of the lithium metal secondary battery at a lower unit price.

The above-mentioned cathode active material may be contained in an amount of 60 to 99 wt.%, or 70 to 99 wt.%, or 80 to 98 wt.%, based on the total weight of the cathode active material layer.

Meanwhile the conductive material contained in the cathode active material layer is a component for further improving the conductivity of the cathode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material including conductive nanomaterials such as carbon nanotubes or carbon nanofibers can further lower the resistance of the lithium-metal secondary battery and further enhance output characteristics.

Typically, the conductive material may be contained in an amount of 1 to 20 wt.%, or 1 to 15 wt.%, or 1 to 10 wt.%, based on the total weight of the cathode active material layer.

The binder optionally included in the cathode active material layer is a component that assists in the bonding between the cathode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the cathode active material layer.

In addition, a filler may be optionally added to the cathode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned cathode can be produced, for example, by dispersing and mixing the cathode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the above-mentioned lithium metal secondary battery may further include a porous separator interposed between the cathode and the anode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 µm, and the thickness may generally range from 5 to 300 µm, but are not limited thereto.

Meanwhile, the above-mentioned lithium metal secondary battery can be manufactured according to a conventional method in the art. For example, the lithium metal secondary battery can be manufactured by housing an electrode assembly including a cathode, an anode, and a separator in a case, and injecting and impregnating the above-mentioned electrolyte in the case.

Such a lithium metal secondary battery can be applied not only to a battery cell used as power sources for small-sized devices, but can also be particularly suitably used as a unit battery in a battery module, which is a power source for medium-sized and large-sized devices. The battery of one embodiment or the other embodiment can be selectively used, taking into consideration an appropriate discharge rate for each application.

Embodiments of the present disclosure will be described in detail to the extent that one of ordinary skill in the art can easily practice the present disclosure. The present disclosure may be implemented in various different forms, and is not limited to the embodiments described herein.

### Example 1: Production of electrolyte

To an electrolyte in which dimethyl ether(DME) as a non-aqueous organic solvent, 1,1,2,2-tetrafluoroethyl-2,2,3,3-tetrafluoropropyl ether(TTE) as an organic anti-solvent, and LiFSI (99.9%, Sigma-Aldrich) as a lithium salt were mixed in a molar ratio of 1.2:3:1, 2,2,3,3-tetrafluoro-1,4-dimethoxybutane(FDMB) was added as an additive in an amount of 3 wt.% based on the total electrolyte, and then mixed to produce the electrolyte of Example 1.

### Example 2: Production of electrolyte

To an electrolyte in which dimethyl ether(DME) as a non-aqueous organic solvent; 1,1,2,2-tetrafluoroethyl-2,2,3,3-tetrafluoropropyl ether (TTE) as an organic anti-solvent; and LiFSI (99.9%, Sigma-Aldrich) as a lithium salt were mixed in a molar ratio of 2:3:1, 2,2,3,3-tetrafluoro-1,4-dimethoxybutane(FDMB) and lithium nitrate were added as additives in amounts of 3.5 wt.% and 0.2 wt.%, respectively, based on the total electrolyte, and then mixed to produce the electrolyte of Example 2.

### Comparative Example 1: Production of electrolyte

An electrolyte in whichdimethyl ether(DME) as a non-aqueous organic solvent; 1,1,2,2-tetrafluoroethyl-2,2,3,3-tetrafluoropropyl ether(TTE) as an organic anti-solvent; LiFSI (99.9%, Sigma-Aldrich) as a lithium salt were mixed in a molar ratio of 1.2:3:1 was produced as the electrolyte of Comparative Example 1.

### Comparative Example 2: Production of electrolyte

To an electrolyte in which dimethyl ether(DME) as a non-aqueous organic solvent; 1,1,2,2-tetrafluoroethyl-2,2,3,3-tetrafluoropropyl ether(TTE) as an organic anti-solvent; LiFSI (99.9%, Sigma-Aldrich) as a lithium salt were mixed in a molar ratio of 2:3:1, lithium nitrate was added as an additive at a content of 0.35 wt.% based on the total electrolyte, and then mixed to produce the electrolyte of Comparative Example 2.

### Preparation Example: Fabrication of pouch cell

A prototype pouch cell was fabricated as follows. Li anode (20 µm, provided by Honjo Metal) and double-sided coated LFP cathode (provided by LG Energy Solution, active material: Super P C65: PVDF=96:2:2) were punched to 40 mm × 60 mm and 30 mm × 50 mm, respectively. The anode and cathode were welded with Ni and Al tabs using an ultrasonic welding machine. All electrodes and separators were stacked and packaged in an aluminum pouch bag, and 3.2 g (3.2 g Ah⁻¹) of the electrolyte of Example or Comparative Example was injected to manufacture a pouch cell, wherein all cell assembly processes were performed in a dry room capable of adjusting the moisture content.

### Experimental Example

Using the pouch cell manufactured in Preparation Example, the discharge capacity for each initial cycle (~20 cycles) was measured while performing charge and discharge under the condition of 0.33C/0.33C, and the measurement results are shown in FIGS. 1a and 1b.

Referring to FIGS. 1a and 1b, it was confirmed that the batteries manufactured using the electrolytes of Examples 1 and 2 exhibited superior initial capacity characteristics compared to Comparative Examples 1 and 2.

In addition, the capacity characteristics and life characteristics were confirmed over approximately 150 cycles using the pouch cell, and the measurement results are shown in FIGS. 2a and 2b.

Referring to FIGS. 2a and 2b, it was confirmed that the batteries manufactured using the electrolytes of Examples 1 and 2 exhibited superior capacity characteristics and cycle life characteristics compared to Comparative Examples 1 and 2.

In addition, the discharge resistance per cycle was measured using the above pouch cell, and the measurement results are shown in FIG. 3.

Referring to FIG. 3, it was confirmed that the batteries manufactured using the electrolytes of Examples 1 and 2 exhibited a lower discharge resistance increase rate compared to Comparative Examples 1 and 2.

## Claims

1. An electrolyte for a lithium secondary battery comprising:
a lithium salt;
a non-aqueous organic solvent;
an organic anti-solvent that exhibits a solubility for the lithium salt that is at least 10 times lower than that of the non-aqueous organic solvent; and
an additive including a fluorine-substituted ether compound.

2. The electrolyte for a lithium secondary battery according to claim 1, wherein the lithium salt comprises at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

3. The electrolyte for a lithium secondary battery according to claim 1, wherein the lithium salt is contained in the electrolyte at a concentration of 1.0 to 2.5 M.

4. The electrolyte for a lithium secondary battery according to claim 1, wherein the non-aqueous organic solvent comprises:
at least one aliphatic ether solvent selected from the group consisting of dimethyl ether, dibutyl ether, tetraglyme, diglyme, and dimethoxy ethane; or
at least one carbonate solvent selected from the group consisting of dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, and methyl(2,2,2-trifluoroethyl)carbonate.

5. The electrolyte for a lithium secondary battery according to claim 1, wherein the organic anti-solvent comprises at least one selected from the group consisting of 1,1,2,2-tetrafluoroethyl-2,2,3,3-tetrafluoropropyl ether(TTE), bis(2,2,2-trifluoroethyl)ether(BTFE), 1,1,2,2-tetrafluoroethyl-2,2,2-trifluoroethyl ether(TFTFE), methoxynonafluorobutane(MOFB), 1H,1H,5H-octafluoropentyl-1,1,2,2-tetrafluoroethyl ether(OTE) and ethoxynonafluorobutane(EOFB).

6. The electrolyte for a lithium secondary battery according to claim 1, wherein the organic anti-solvent : the non-aqueous organic solvent are included in a molar ratio of 1:0.4 to 1:1.

7. The electrolyte for a lithium secondary battery according to claim 1, wherein the fluorine-substituted ether compound comprises at least one fluorine-substituted dialkoxy alkane selected from the group consisting of 2,2,3,3-tetrafluoro-1,4-dimethoxybutane(FDMB) and 2,2,3,3-tetrafluoro-1,4-diethoxybutane(FDEB).

8. The electrolyte for a lithium secondary battery according to claim 1, wherein the additive further comprises a nitrate-based and/or nitrite-based compound.

9. The electrolyte for a lithium secondary battery according to claim 8, wherein the nitrate-based and/or nitrite-based compound comprises at least one selected from lithium nitrate(LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), and cesium nitrite (CsNO₂).

10. The electrolyte for a lithium secondary battery according to claim 1, wherein the additive comprises 1 to 10 wt.% of the fluorine-substituted ether compound and 0.2 to 5 wt.% of the nitrate-based and/or nitrite-based compound, based on the total weight of the electrolyte.

11. A lithium secondary battery comprising:
a cathode containing a cathode active material;
an anode containing a lithium metal layer;
a separator interposed between the cathode and the anode; and
the electrolyte according to any one of claims 1 to 10.

12. The lithium secondary battery according to claim 11, wherein the cathode active material comprises lithium iron phosphate.
